# EUROPÄISCHE PATENTSCHRIFT

(11) **EP 1 877 965 B1**
(45) Veröffentlichungstag und Bekanntmachung des Hinweises auf die Patenterteilung: **09.11.2011**
(21) Anmeldenummer: 06742740.1
(22) Anmeldetag: 28.04.2006
(51) Int. Cl.: G06K 19/077

(54) **VERFAHREN ZUR INITIALISIERUNG UND/ODER PERSONALISIERUNG EINES TRAGBAREN DATENTRÄGERS**
METHOD FOR INITIALIZATION AND/OR PERSONALIZATION OF A PORTABLE DATA CARRIER
PROCEDE D'INITIALISATION ET/OU DE PERSONNALISATION D'UN SUPPORT DE DONNEES PORTABLE

(30) Priorität: 29.04.2005 DE 102005020093; 02.08.2005 DE 102005036303
(43) Veröffentlichungstag der Anmeldung: 16.01.2008
(73) Patentinhaber: Giesecke & Devrient GmbH, 81677 München (DE)
(72) Erfinder: JANSEN, Jens, 81825 München (DE); TARANTINO, Thomas, 83410 Laufen (DE); KRYSIAK, Ralph, 85570 Markt-Schwaben (DE)
(86) Internationale Anmeldenummer: PCT/EP2006/003990
(87) Internationale Veröffentlichungsnummer: WO 2006/117152

(56) Entgegenhaltungen:
- DE-A1- 19 742 126
- US-A- 3 624 938
- US-A- 4 361 756
- US-A- 4 786 791
- US-A- 6 095 416
- US-A1- 2002 190 364

## Beschreibung

Die Erfindung betrifft ein Verfahren zur Initialisierung und/oder Personalisierung eines tragbaren Datenträgers. Weiterhin betrifft die Erfindung einen tragbaren Datenträger.

Tragbare Datenträger können sehr vielfältig eingesetzt werden, beispielsweise zur Abwicklung von Transaktionen des Zahlungsverkehrs, als Ausweisdokumente bei Zugangskontrollen, als Berechtigungsnachweis zur Nutzung eines Mobilfunksystems usw. Bevor ein tragbarer Datenträger bei einer Anwendung eingesetzt werden kann, ist es in der Regel erforderlich, im Rahmen einer Initialisierung und einer nachfolgenden Personalisierung Daten in einen nichtflüchtigen Speicher des tragbaren Datenträgers einzuschreiben. Bei der Initialisierung werden beispielsweise Ergänzungen eines Betriebssystems des tragbaren Datenträgers, das in einem Permanentspeicher des tragbaren Datenträgers gespeichert ist, in den nichtflüchtigen Speicher eingeschrieben und Dateistrukturen angelegt. Weiterhin wird die nachfolgende Personalisierung vorbereitet. Bei der Personalisierung werden im nichtflüchtigen Speicher zum Beispiel Anwendungen installiert und personenbezogene Daten eingeschrieben. Die Grenzen zwischen Initialisierung und Personalisierung sind nicht starr, so dass ein gewisser Spielraum besteht, Daten im Rahmen der Initialisierung oder im Rahmen der Personalisierung in den tragbaren Datenträger einzuschreiben. Außerdem besteht auch die Möglichkeit, bei einem bereits eingesetzten tragbaren Datenträger eine Initialisierung und/ oder Personalisierung durchzuführen, um das Betriebssystem oder die Anwendungsprogramme auf einen aktuellen Stand zu bringen, personenbezogene Daten zu ändern oder zu ergänzen oder neue Anwendungen zu installieren.

Manche tragbaren Datenträger verfügen über eine manuelle Schalteinrichtung, durch deren Betätigung eine Datenübertragung ermöglicht wird. Derartige Schalteinrichtungen können insbesondere bei tragbaren Datenträgern vorgesehen sein, bei denen die Datenübertragung kontaktlos erfolgt und dienen dem Schutz vor unberechtigten Zugriffen auf den tragbaren Datenträger. Wenn der Benutzer des tragbaren Datenträgers mit einer Datenübertragurig einverstanden ist, gibt er sie durch eine manuelle Betätigung der Schalteinrichtung frei.

Aus der US-PS 4,786,791 ist beispielsweise eine Karte bekannt, die eine Spule durch eine Spulenansteuervornchtung so angesteuert wird, dass sie einen Magnetstreifen simuliert. Die Spulenansteuervorrichtung wird durch einen Schalteraktiviert. Aus der US 2002/0190364 A1 ist eine kontaktlose Karte bekannt, bei der die Anschlüsse der Spule an den Chip kurzgeschlossen werden. Um die Karte in den Betriebszustand zu versetzen, werden die Kurzschlüsse aufgehoben, indem die entsprechenden Leitungen unterbrochen werden.

Der nächstliegende der Technik DE 197 42126 A1 offenbart einen Datenträger mit einer Antenne zum kontaktlosen Datenaustausch, bei dem zwischen der Antenne und dem Halbleiterchip ein Schaltelement angeordnet ist, mit dem der Datenträger in den Betriebszustand versetzt werden kann,

Eine derartige Schalteinrichtung führt allerdings zu Problemen bei der Initialisierung bzw. Personalisierung des tragbaren Datenträgers, da hierbei eine Datenverbindung zwischen einem externen Gerät und dem tragbaren Datenträger ausgebildet werden muss und der hoch automatisierter Initialisie rungs- bzw. Personalisierungsprozess allenfalls in Ausnahmefällen mit einer manuellen Betätigung der Schalteinrichtung vereinbar sein wird.

Der Erfindung liegt demnach die Aufgabe zugrunde, die Initialisierung und/oder Personalisierung eines tragbaren Datenträgers, der eine Schalteinrichtung aufweist, mit einem vertretbaren Aufwand auf effiziente Weise zu ermöglichen.

Diese Aufgabe wird durch ein Verfahren mit der Merkmalskombination des Anspruchs 1, durch ein alternatives Verfahren mit der Merkmalskombination des Anspruchs 12 und durch einen tragbaren Datenträger mit der Merkmalskombination des Anspruchs 13 gelöst.

Die Erfindung hat den Vorteil, dass die Initialisierung und/ oder Personalisierung eines tragbaren Datenträgers, der eine Schalteinrichtung aufweist, mit einem ähnlich hohen Automatisierungsgrad wie im Falle eines tragbaren Datenträgers ohne Schalteinrichtung abgewickelt werden kann. Dadurch wird die Verbreitung von tragbaren Datenträgern mit Schalteinrichtung erheblich erleichtert.

Vorzugsweise ist vorgesehen, dass die mit der Schalteinrichtung freischaltbare Datenübertragung über die Datenübertragungseinrichtung kontaktlos abgewickelt wird.

Die Überbrückung der Schalteinrichtung kann als ein Bestandteil des tragbaren Datenträgers ausgebildet werden. Dies ermöglicht es, den Initialisierungs- bzw. Personalisierungsprozess im Kern auf die für sich bekannte Weise mit bekannten und somit ohnehin vorhandenen Maschinen durchzuführen, wobei der tragbare Datenträger vor und nach dem Initialisierungs- bzw. Personalisierungsprozess erfindungsgemäß zu modifizieren ist. Besonders vorteilhaft ist es, wenn die Überbrückung der Schalteinrichtung bei der Herstellung des tragbaren Datenträgers ausgebildet wird, da dies nur einen geringen Zusatzaufwand erfordert.

Die Schalteinrichtung wird vorzugsweise mittels eines fest angeschlossenen elektrischen Verbindungselements überbrückt. Dies erfordert wenig Aufwand und stellt eine zuverlässige Überbrückung sicher. Zum Aufheben der Überbrückung kann das elektrische Verbindungselement wenigstens partiell entfernt oder zerstört werden. Dies lässt sich auf vielfältige Weise realisieren und erfordert ebenfalls nur einen geringen Aufwand. Beispielsweise wird im Bereich des elektrischen Verbindungselements ein Teil des tragbaren Datenträgers entfernt. Dies hat den zusätzlichen Vorteil, dass leicht erkennbar ist, ob die Überbrückung der Schalteinrichtung noch besteht. Bei einer Variante des erfindungsgemäßen Verfahrens wird das elektrische Verbindungselement durch mechanische Einwirkung wenigstens partiell entfernt oder zerstört. Insbesondere kann das elektrische Verbindungselement beim Ausbilden einer Kavität für die Schalteinrichtung wenigstens partiell entfernt werden, so dass für die Entfernung kein Zusatzaufwand erforderlich ist. Bei einer weiteren Variante des erfindungsgemäßen Verfahrens wird das elektrische Verbindungselement durch Energiezufuhr wenigstens partiell entfernt oder zerstört. Dabei besteht insbesondere die Möglichkeit, dass die Energie einer Empfangseinrichtung zugeführt wird, die als ein Bestandteil des elektrischen Verbindungselements ausgebildet ist. Eine weitere Alternative sieht vor, dass das der Überbrückung dienende elektrische Verbindungselement im Hochprägebereich der Karte verläuft. Bei der Hochprägung, die nach der elektrischen Personalisierung stattfindet, wird die Überbrückung an wenigstens einer Stelle unterbrochen.

Der erfindungsgemäße tragbare Datenträger weist eine elektronische Schaltung zum Speichern und/oder Verarbeiten von Daten, eine Datenübertragungseinrichtung und eine Schalteinrichtung auf. Die Besonderheit des erfindungsgemäßen tragbaren Datenträgers besteht darin, dass der Schalteinrichtung ein elektrisches Verbindungselement parallel geschaltet ist, das die Sehalteinrichtung überbrückt.

Die Schalteinrichtung ist an die Datenübertragungseinrichtung angeschlossen. Insbesondere ist vorgesehen, dass die Verwendbarkeit der Datenübertragungseinrichtung für eine Datenübertragung vom Betätigungszustand der Schalteinrichtung abhängt, wenn die durch das elektrische Verbindungselement ursprünglich ausgebildete Überbrückung der Schalteinrichtung aufgehoben ist.

Der erfindungsgemäße tragbare Datenträger ist vorzugsweise als eine Chipkarte ausgebildet.

Die Erfindung wird nachstehend anhand der in der Zeichnung dargestellten Ausführungsbeispiele erläutert, bei denen der tragbare Datenträger jeweils als eine Chipkarte ausgebildet ist. Die Erfindung ist allerdings nicht auf Chipkarten beschränkt, sondern bezieht sich gleichermaßen auch auf andere tragbare Datenträger. Dabei ist als ein tragbarer Datenträger im Sinn der Erfindung ein Rechnersystem anzusehen, bei dem die Ressourcen, d.h. Speicherressourcen und/ oder Rechenkapazität (Rechenleistung) begrenzt sind, z.B. eine Chipkarte (Smart Card, Mikroprozessor-Chipkarte) oder ein Token oder ein Chipmodul zum Einbau in eine Chipkarte oder in ein Token. Der tragbare Datenträger hat einen Körper, in dem eine CPU (ein Mikroprozessor) angeordnet ist, und der jede beliebige standardisierte oder nicht standardisierte Gestalt haben kann, beispielsweise die Gestalt einer flachen Chipkarte ohne Norm oder nach einer Norm wie z.B. ISO 7810 (z.B. ID-1, ID-00, ID-000) oder die eines volumigen Tokens. Der tragbare Datenträger kann weiter eine oder mehrere beliebige Schnittstellen für eine kontaktlose und/oder kontaktbehaftete Kommunikation mit einem Lesegerät oder Datenverarbeitungssystem (z.B. Personal Computer, Workstation, Server) haben.

Es zeigen:
- Fig. 1: ein erstes Ausführungsbeispiel einer erfindungsgemäß ausgebildeten Chipkarte in einer schematischen Aufsicht,
- Fig. 2: ein zweites Ausführungsbeispiel der erfindungsgemäßen Chipkarte in einer Fig.1 entsprechenden Darstellung,
- Fig. 3: ein drittes Ausführungsbeispiel der erfindungsgemäßen Chipkarte in einer schematischen Schnittdarstellung,
- Fig. 4: das dritte Ausführungsbeispiel der erfindungsgemäßen Chipkarte in einer Fig. 3 entsprechenden Darstellung nach dem Durchtrennen des elektrischen Verbindungselements und
- Fig. 5: ein Beispiel für eine Betätigungsvorrichtung zum automatisierten Betätigen des Tasters der Chipkarte in einer schematischen Seitenansicht.

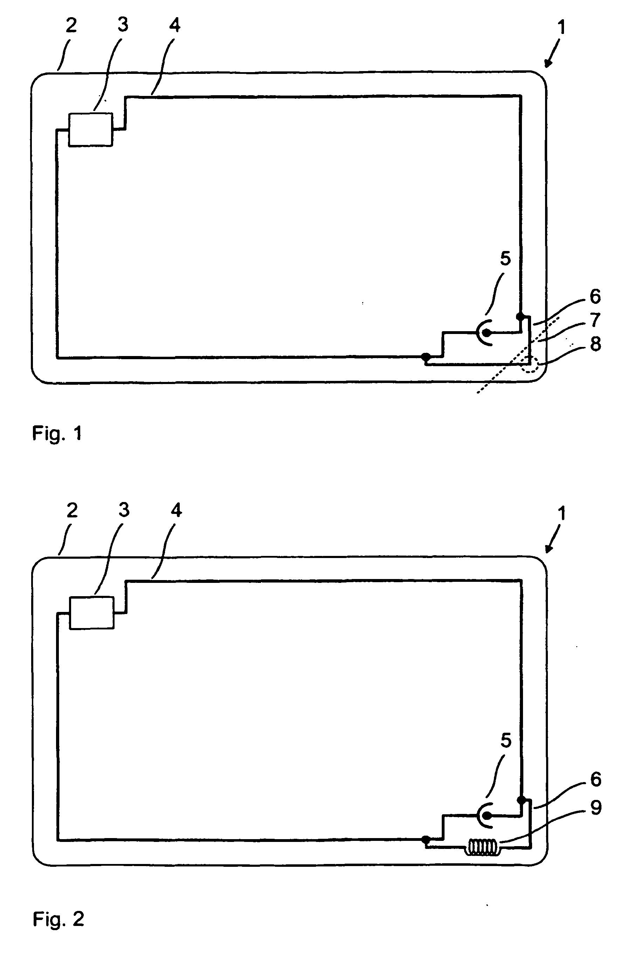

Fig. 1 zeigt ein erstes Ausführungsbeispiel einer erfindungsgemäß ausgebildeten Chipkarte 1 in einer schematischen Aufsicht. In Fig.1 sind auch Komponenten dargestellt, die im Inneren der Chipkarte 1 angeordnet sind. Soweit nichts anderes erwähnt ist, gelten die im Folgenden für das erste Ausführungsbeispiel der Chipkarte 1 gemachten Erläuterungen auch für die weiteren Ausführungsbeispiele.

Die Chipkarte 1 weist einen Kartenkörper 2 auf, der bzgl. seiner Abmessungen beispielsweise gemäß der Norm ISO/IEC 7810 ausgebildet ist und in den ein Mikrocontroller 3 eingebettet ist. Der Kartenkörper 2 besteht vorzugsweise aus Kunststoff und kann zum Beispiel durch Lamination mehrerer Kunststofffolien hergestellt sein. An den Mikrocontroller 3 ist eine Antenne 4 angeschlossen, die im dargestellten Ausführungsbeispiel als eine Spule mit einer Windung ausgebildet ist. Die Spule kann beispielsweise als eine Drahtspule ausgebildet sein oder mittels Leiterbahnen realisiert sein, die in Spulenform zum Beispiel drucktechnisch auf eine oder mehrere der Kunststofffolien des Kartenkörpers 2 aufgebracht sind. Ebenso können die Leiterbahnen auch durch Ätzen oder auf sonstige Weise hergestellt sein. Die freien Enden der Spule sind mit dem Mikrocontroller 3 verbunden. Alternativ zum dargestellten Ausführungsbeispiel kann die Antenne 4 auch als eine Spule mit mehreren Windungen ausgebildet oder in sonstiger Weise realisiert sein.

Die Antenne 4 ist durch einen manuell betätigbaren Taster 5 unterbrochen. Parallel zum Taster 5 ist ein elektrisches Verbindungselement 6 geschaltet, das den Taster 5 überbrückt und dadurch einen Zustand herstellt, der einer nicht unterbrochenen Antenne 4 ohne Taster 5 entspricht. Das elektrische Verbindungselement 6 kann beispielsweise als ein Draht oder als eine Leiterbahn ausgebildet sein.

Weiterhin sind in Fig. 1 eine Stanzlinie 7, die auch eine andere als die in der Figur dargestellte Form aufweisen kann, und eine Lochung 8 eingezeichnet, die alternativ zueinander vorgesehen sind und jeweils im Bereich des elektrischen Verbindungselements 6 angeordnet sind. Die Stanzlinie 7 und die Lochung 8 sind jeweils gestrichelt dargestellt, da eine Stanzung entlang der Stanzlinie 7 bzw. eine Ausbildung der Lochung 8 jeweils erst im Laufe des erfindungsgemäßen Verfahrens ausgeführt werden und bei der in Fig. 1 dargestellten Chipkarte 1 noch nicht erfolgt sind.

Bei einer Verwendung der Chipkarte 1 durch einen Benutzer wird eine Datenübertragung zwischen dem Mikrocontroller 3 und einem nicht figürlich dargestellten externen Gerät, das als ein für sich bekanntes Lesegerät ausgebildet sein kann, durchgeführt. Die Datenübertragung erfolgt kontaktlos mit Hilfe der an den Mikrocontroller 3 angeschlossenen Antenne 4. Zum Zeitpunkt der Verwendung der Chipkarte 1 durch den Benutzer, d. h. zu einem späteren Zeitpunkt als in Fig.1 dargestellt, ist das elektrische Verbindungselement 6 durch eine Stanzung entlang der Stanzlinie 7 oder durch die Lochung 8 durchtrennt. Dies bedeutet, dass es vom Betätigungszustand des Tasters 5 abhängt, ob die Antenne 4 für die kontaktlose Datenübertragung nutzbar ist oder nicht. Vorzugsweise ist die Antenne 4 im unbetätigten Zustand des Tasters 5 unterbrochen, so dass eine kontaktlose Datenübertragung mit Hilfe der Antenne 4 nicht möglich ist. Im betätigten Zustand des Tasters 5 ist die Unterbrechung der Antenne 4 aufgehoben und es kann mit Hilfe der Antenne 4 eine kontaktlose Datenübertragung durchgeführt werden. Auf diese Weise hat der Benutzer der Chipkarte 1 die Möglichkeit die Datenübertragung freizugeben, indem er den Taster 5 betätigt oder die Datenübertragung zu unterbinden, indem er eine Betätigung des Tasters 5 unterlässt.

Vor der erstmaligen Verwendung der Chipkarte 1 durch den Benutzer werden im Rahmen eines Initialisierungsprozesses und/oder eines Personalisierungsprozesses Daten in den Mikrocontroller 3 der Chipkarte 1 eingeschrieben. In der Regel wird zunächst eine Initialisierung und danach eine Personalisierung der Chipkarte 1 durchgeführt. Bei der Initialisierung werden insbesondere Ergänzungen des Betriebssystems im Mikrocontroller 3 installiert und Datenstrukturen angelegt. Bei der Personalisierung werden beispielsweise Anwendungsprogramme implementiert und personenbezogene Daten in den Mikrocontroller 3 eingeschrieben. Da im Rahmen der Erfindung für die Initialisierung und die Personalisierung die gleichen Maßnahmen getroffen werden, wird die Erfindung im Folgenden lediglich unter Bezugnahme auf die Personalisierung näher beschrieben. Für die Initialisierung oder die kombinierte Durchführung der Initialisierung und der Personalisierung gilt jeweils entsprechendes, d.h. die Erfindung eignet sich gleichermaßen für die Initialisierung und die Personalisierung oder einer Kombination aus beidem.

Vor der Personalisierung wird die Chipkarte 1 in der in Fig. 1 dargestellten Weise ausgebildet, wobei weder die Stanzung entlang der Stanzlinie 7 noch die Lochung 8 ausgeführt wird. Dies bedeutet, dass das bei der Herstellung der Chipkarte 1 ausgebildete elektrische Verbindungselement 6 den Taster 5 überbrückt und somit außer Funktion setzt. Die Antenne 4 steht unabhängig vom Betätigungszustand des Tasters 5 für eine kontaktlose Datenübertragung zwischen einem externen Gerät und dem Mikrocontroller 3 zur Verfügung, solange das elektrische Verbindungselement 6 intakt ist. Folglich kann die Personalisierung der derart vorbereiteten Chipkarte 1 in an sich bekannter Weise durchgeführt werden, indem die Personalisierungsdaten von einer Personalisierungseinrichtung kontaktlos an die Antenne 4 der Chipkarte 1 und damit an den Mikrocontroller 3 übertragen werden.

Wenn die Personalisierung inklusive gegebenenfalls erforderlicher Prüfmaßnahmen oder sonstige Maßnahmen, die eine Datenverbindung zum Mikrocontroller 3 erfordern, abgeschlossen ist, wird eine Stanzung entlang der Stanzlinie 7 durchgeführt und dadurch eine Ecke der Chipkarte 1 entfernt.

Da die Stanzlinie 7 das elektrische Verbindungselement 6 quert, wird das elektrische Verbindungselement 6 durch den Stanzvorgang dauerhaft durchtrennt. Dies bedeutet, dass die bis zu diesem Zeitpunkt durch das elektrische Verbindungselement 6 ausgebildete Überbrückung des Tasters 5 aufgehoben wird und es ab sofort vom Betätigungszustand des Tasters 5 abhängt, ob eine kontaktlose Datenübertragung zwischen einem externen Gerät und dem Mikrocontroller 3 möglich ist.

Anstelle der Stanzung entlang der Stanzlinie 7 kann das elektrische Verbindungselement 6 auch durch Ausbilden der Lochung 8 durchtrennt werden. Die Lochung 8 kann beispielsweise durch eine Stanzoperation ausgebildet werden. Ebenso ist es auch möglich, die Lochung 8 durch Bestrahlung mit einem Laserstrahl auszubilden. In einer Abwandlung wird die Bestrahlung mit dem Laserstrahl so ausgeführt, dass das elektrische Verbindungselement 6 im bestrahlten Bereich schmilzt oder verdampft und somit durchtrennt wird, ohne dass dabei die Lochung 8 im Kartenkörper 2 ausgebildet wird.

Anstelle der Lochung 8 kann die Durchtrennung des Verbindungselements 6 auch durch einen Fräsvorgang erzeugt werden, so dass in der Karte lediglich eine Aussparung entsteht.

Fig. 2 zeigt ein zweites Ausführungsbeispiel der erfindungsgemäßen Chipkarte 1 in einer Fig.1 entsprechenden Darstellung. Dieses Ausführungsbeispiel entspricht in weiten Zügen dem ersten Ausführungsbeispiel. Insbesondere ist analog zum ersten Ausführungsbeispiel das elektrische Verbindungselement 6 vorgesehen, das den Taster 5 überbrückt. Die Besonderheit des zweiten Ausführungsbeispiels der Chipkarte 1 besteht darin, dass das elektrische Verbindungselement 6 eine kleine Zusatzantenne 9 aufweist, die beim ersten Ausführungsbeispiel nicht vorgesehen ist. Die Zusatzantenne 9 ist so ausgelegt, dass sie in einem Hochfrequenzfeld soviel Energie absorbiert, dass das Material der Zusatzantenne 9 schmilzt oder verdampft. Dies hat eine Unterbrechung der Zusatzantenne 9 und somit auch des elektrischen Verbindungselements 6 zur Folge. Beim zweiten Ausführungsbeispiel der Chipkarte 1 kann die Überbrückung des Tasters 5 somit dadurch aufgehoben werden, dass die Zusatzantenne 9 einem geeigneten Hochfrequenzfeld ausgesetzt wird und dadurch das elektrische Verbindungselement 6 im Bereich der Zusatzantenne 9 durchtrennt wird. Wie beim ersten Ausführungsbeispiel wird das elektrische Verbindungselement 6 nach der Durchführung der Personalisierung durchtrennt, so dass die Chipkarte 1 danach durch einen Benutzer in der beschriebenen Weise verwendet werden kann.

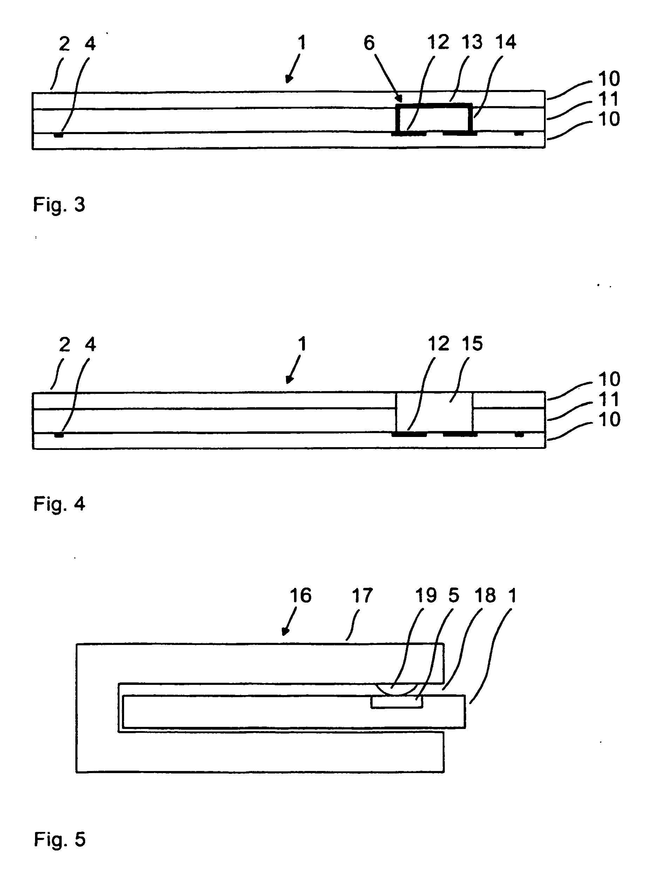

Fig. 3 und 4 zeigen ein Ausführungsbeispiel des erfindungsgemäßen Verfahren gemäß Anspruch 12. Wie in den Fig.1 und 2 ist die Chipkarte 1 auch in Fig. 3 in der für die Personalisierung vorgesehenen Ausbildung dargestellt.

Bei diesem Ausführungsbeispiel besteht der Kartenkörper 2 beispielsweise aus zwei Deckfolien 10 und einer dazwischen angeordneten Innenfolie 11, die durch Lamination dauerhaft miteinander verbunden sind. Auf die Innenfolie 11 ist die Antenne 4 aufgebracht. Weiterhin sind auf die Innenfolie 11 zwei Kontaktflächen 12 aufgebracht, die Bestandteile des zu einem späteren Zeitpunkt fertig gestellten Tasters 5 darstellen und mit den freien Enden der unterbrochenen Antenne 4 verbunden sind. Auch bei-diesem Ausführungsbeispiel ist das elektrische Verbindungselement 6 vorgesehen und verbindet die beiden Kontaktflächen 12 miteinander, so dass die Antenne 4 betriebsbereit ist.

Das elektrische Verbindungselement 6 besteht aus einer Brücke 13, die auf der zu den Kontaktflächen 12 rückwärtigen Seite der Innenfolie 11 aufgebracht ist und aus zwei Durchkontaktierungen 14, die sich durch die Innenfolie 11 hindurch erstrecken und die beiden Kontaktflächen 12 mit der Brükke 13 verbinden. Somit ist die in Fig. 3 dargestellte Chipkarte 1 trotz des noch nicht fertig gestellten Tasters 5 so ausgebildet, dass die Personalisierung durchgeführt werden kann.

Nach Abschluss der Personalisierung und gegebenenfalls erforderlicher Zusatzoperationen wird das elektrische Verbindungselement 6 analog zu den ersten beiden Ausführungsbeispielen der Chipkarte 1 durchtrennt, damit der Taster 5 bei der nachfolgenden Verwendung der Chipkarte 1 nutzbar ist. Allerdings wird die Durchtrennung des elektrischen Verbindungselements 6 auf andersartige Weise durchgeführt und mit der Fertigstellung des Tasters 5 kombiniert. Dies wird anhand von Fig. 4 erläutert.

Fig. 4 zeigt die Chipkarte 1 in einer Fig. 3 entsprechenden Darstellung nach dem Durchtrennen des elektrischen Verbindungselements 6. Das elektrische Verbindungselement 6 wird beim Ausbilden einer Kavität 15 durchtrennt, die sich im Bereich des elektrischen Verbindungselements 6 durch eine der Deckfolien 10 und die Innenfolie 11 hindurch bis zu der weiteren Deckfolie 10 erstreckt. Beim Ausbilden der Kavität 15, beispielsweise mittels eines Fräsvorgangs, werden die Brücke 13 und die Durchkontaktierungen 14 teilweise oder, wie in Fig. 4 dargestellt, vollständig entfernt und dabei die Kontaktflächen 12 des Tasters 5 freigelegt. Anschließend wird ein nicht figürlich dargestellter Einsatz zur Ausbildung des Tasters 5 in die Kavität 15 implantiert und dadurch der Taster 5 fertig gestellt. Nunmehr kann die Chipkarte 1 in der bereits beschriebenen Weise vom Benutzer verwendet werden und dabei die kontaktlose Datenübertragung mittels des Tasters 5 freigeschaltet werden.

Den vorstehend beschriebenen drei Chipkarten ist gemeinsam, dass der Taster 5, der bei der dritten Chipkarte noch nicht fertig gestellt ist, jeweils mittels des elektrischen Verbindungselements 6 überbrückt wird und dadurch die Antenne 4 unabhängig vom Betätigungszustand des Tasters 5 betriebsbereit gemacht wird. Dies bedeutet, dass vor der Personalisierung jeweils das elektrische Verbindungselement 6 auszubilden und nach der Personalisierung zu durchtrennen ist. Dabei erfolgt die Ausbildung des elektrischen Verbindungselements 6 vorzugsweise bei der Herstellung der Chipkarte 1. Alternativ dazu ist es auch möglich, eine Chipkarte 1, die kein elektrisches Verbindungselement 6 aufweist, der Personalisierung zuzuführen. Um auch in diesem Fall einen automatisierten Ablauf der Personalisierung zu ermöglichen, ist auf bekannter und Weise, eine automatische Betätigung des Tasters 5 während der Personalisierung vorgesehen. Dies wird anhand von Fig. 5 näher erläutert.

Fig. 5 zeigt ein Beispiel für eine Betätigungsvorrichtung 16 zum automatisierten Betätigen des Tasters 5 der Chipkarte 1 in einer schematischen Seitenansicht. Die Betätigungsvorrichtung 16 weist ein Gehäuse 17 auf, das über einen Öffnung 18 zum Einführen der Chipkarte 1 verfügt. An der Innenseite des Gehäuses 17 ist ein Betätigungselement 19 in einer Position angeordnet, die der Position des Tasters 5 im vollständig in das Gehäuse 17 eingeführten Zustand der Chipkarte 1 entspricht. Das Betätigungselement 19 ist als ein Vorsprung ausgebildet, der am Taster 5 der eingeführten Chipkarte 1 anliegt und diesen betätigt. Dabei kann das Betätigungselement 19 wahlweise starr oder elastisch nachgiebig ausgebildet sein.

Zur Durchführung der Personalisierung wird die Chipkarte 1 durch einen geeigneten Transportmechanismus in die Betätigungsvorrichtung 16 eingeführt. Bis zu diesem Zeitpunkt ist der Taster 5 nicht betätigt und somit keine kontaktlose Datenübertragung über die Antenne 4 der Chipkarte 1 möglich. Durch das Einführen der Chipkarte 1 in die Betätigungsvorrichtung 16 wird die Chipkarte 1 in eine Position gebracht, in der das Betätigungselement 19 gegen den Taster 5 drückt und diesen dadurch betätigt. Auf diese Weise wird die Antenne 4 in Betriebsbereitschaft versetzt und somit eine kontaktlose Datenübertragung ermöglicht. In dieser Position verbleibt die Chipkarte 1 bis zum Abschluss der Personalisierung. Danach wird die Chipkarte 1 aus der Betätigungsvorrichtung 16 entnommen, so dass das Betätigungselement 19 nicht mehr gegen den Taster 5 gepresst wird und die Betätigung des Tasters 5 somit aufgehoben wird. Nach der Entnahme aus der Betätigungsvorrichtung 16 kann die Chipkarte 1 in der beschriebenen Weise vom Benutzer verwendet werden. Im Gegensatz zu den Ausführungsbeispielen der Vorliegenden Erfindung ist hierzu eine Durchtrennung eines elektrischen Verbindungselements 6 nicht erforderlich, da die in Fig. 5 dargestellte Betätigungsvorrichtung 16 bei Chipkarten eingesetzt wird, bei denen das elektrische Verbindungselement 6 zur Überbrückung des Tasters 5 nicht vorgesehen ist.

## Patentansprüche

1. Verfahren zur Initialisierung und/ oder Personalisierung eines tragbaren Datenträgers (1), der eine elektronische Schaltung (3), eine Datenübertragungseinrichtung (4) und eine Schalteinrichtung (5) aufweist, wobei mit der Schalteinrichtung (5) eine Datenübertragung freischaltbar ist, **dadurch gekennzeichnet, dass** vor der Durchführung der Initialisierung und/oder Personalisierung eine Überbrückung der Schalteinrichtung (5) ausgebildet wird und nach der Durchführung der Initialisierung und/ oder Personalisierung die Überbrückung wieder aufgehoben wird.

2. Verfahren nach Anspruch 1, **dadurch gekennzeichnet, dass** die Datenübertragung über die Datenübertragungseinrichtung (4) kontaktlos abgewickelt wird.

3. Verfahren nach einem der vorhergehenden Ansprüche, **dadurch gekennzeichnet, dass** die Überbrückung der Schalteinrichtung (5) als ein Bestandteil des tragbaren Datenträgers (1) ausgebildet wird.

4. Verfahren nach einem der vorhergehenden Ansprüche, **dadurch gekennzeichnet, dass** die Überbrückung der Schalteinrichtung (5) bei der Herstellung des tragbaren Datenträgers (1) ausgebildet wird.

5. Verfahren nach einem der vorhergehenden Ansprüche, **dadurch gekennzeichnet, dass** die Schalteinrichtung (5) mittels eines elektrischen Verbindungselements (6) überbrückt wird.

6. Verfahren nach Anspruch 5, **dadurch gekennzeichnet, dass** das.elektrische Verbindungselement (6) zum Aufheben der Überbrückung wenigstens partiell entfernt oder zerstört wird.

7. Verfahren nach Anspruch 6, **dadurch gekennzeichnet, dass** im Bereich des elektrischen Verbindungselements (6) ein Teil des tragbaren Datenträgers (1) entfernt wird.

8. Verfahren nach einem der Ansprüche 6 oder 7, **dadurch gekennzeichnet, dass** das elektrische Verbindungselement (6) durch mechanische Einwirkung wenigstens partiell entfernt oder zerstört wird.

9. Verfahren nach einem der Ansprüche 6 bis 8, **dadurch gekennzeichnet, dass** das elektrische Verbindungselement (6) im Hochprägebereich des tragbaren Datenträgers verläuft und bei der Hochprägung partiell entfernt oder zerstört wird.

10. Verfahren nach einem der Ansprüche 6 oder 7, **dadurch gekennzeichnet, dass** das elektrische Verbindungselement (6) durch Energiezufuhr wenigstens partiell entfernt oder zerstört wird.

11. Verfahren nach Anspruch 10, **dadurch gekennzeichnet, dass** die Energie einer Empfangseinrichtung (9) zugeführt wird, die als ein Bestandteil des elektrischen Verbindungselements (6) ausgebildet ist.

12. Verfahren zur Initialisierung und/oder Personalisierung eines tragbaren Datenträgers (1), der eine elektronische Schaltung (3), eine Datenübertragungseinrichtung (4) und eine Schalteinrichtung (5) aufweist, wobei mit der Schalteinrichtung (5) eine Datenübertragung freischaltbar ist und wobei die Schaltungseinrichtung aus zwei in einer Kavität angeordneten Kontaktflächen (12) und einem Einsatz besteht, **dadurch gekennzeichnet, dass** ein elektrisches Verbindungs-element (6), das vor der Initialisierung und/oder Personalisierung die Kontaktflächen (12) elektrisch verbindet, nach der Initialisierung und/oder Personalisierung des Datenträgers beim Ausbilden einer Kavität (15) für die Schalteinrichtung (5) wenigstens partiell entfernt wird und nach dem Ausbilden der Kavität der Einsatz zur Vervollständigung der Schalteinrichtung in die Kavität eingebracht wird.

13. Tragbarer Datenträger mit einer elektronischen Schaltung (3) zum Speichern und/ oder Verarbeiten von Daten, einer Datenübertragungseinrichtung (4) und einer Schalteinrichtung (5), wobei mit der Schalteinrichtung (5) eine Datenübertragung freischaltbar ist, **dadurch gekennzeichnet, dass** der Schalteinrichtung (5) ein elektrisches Verbindungselement (6) parallel geschaltet ist, das die Schalteinrichtung (5) überbrückt.

14. Tragbarer Datenträger nach Anspruch 13, **dadurch gekennzeichnet, dass** das elektrische Verbindungselement (6) im Bereich der Hochprägung angeordnet ist.

15. Tragbarer Datenträger nach Anspruch 13, **dadurch gekennzeichnet, dass** das elektrische Verbindungselement (6) eine Empfangseinrichtung zum Empfang von Energie für eine wenigstens partielle Entfernung oder Zerstörung des elektrischen Verbindungselements (6) aufweist.

## Claims

1. A method for initializing and/or personalizing a portable data carrier (1) which has an electronic circuit (3), a data transmission device (4) and a switching device (5), wherein a data transmission can be enabled with the switching device (5), **characterized in that** a bridging of the switching device (5) is formed before the initialization and/or personalization is carried out, and the bridging is eliminated after the initialization and/or personalization is carried out.

2. The method according to claim 1, **characterized in that** the data transmission is conducted contactlessly via the data transmission device (4).

3. The method according to either of the preceding claims, **characterized in that** the bridging of the switching device (5) is formed as a component of the portable data carrier (1).

4. The method according to any of the preceding claims, **characterized in that** the bridging of the switching device (5) is formed upon the manufacture of the portable data carrier (1).

5. The method according to any of the preceding claims, **characterized in that** the switching device (5) is bridged by means of an electrical connecting element (6).

6. The method according to claim 5, **characterized in that** the electrical connecting element (6) is at least partially removed or destroyed for eliminating the bridging.

7. The method according to claim 6, **characterized in that** a part of the portable data carrier (1) is removed in the area of the electrical connecting element (6).

8. The method according to either of claims 6 and 7, **characterized in that** the electrical connecting element (6) is at least partially removed or destroyed by mechanical action.

9. The method according to any of claims 6 to 8, **characterized in that** the electrical connecting element (6) extends in the high-embossed area of the portable data carrier and is partially removed or destroyed when the high-embossing is effected.

10. The method according to either of claims 6 and 7, **characterized in that** the electrical connecting element (6) is at least partially removed or destroyed by supplying energy.

11. The method according to claim 10, **characterized in that** the energy is supplied to a receiving device (9) which is configured as a component of the electrical connecting element (6).

12. A method for initializing and/or personalizing a portable data carrier (1) which has an electronic circuit (3), a data transmission device (4) and a switching device (5), wherein a data transmission can be enabled with the switching device (5) and wherein the switching device consists of two contact surfaces (12) arranged in a cavity and of an insert, **characterized in that** an electrical connecting element (6) which electrically connects the contact surfaces (12) before the initialization and/or personalization is at least partially removed after the initialization and/or personalization of the data carrier upon formation of a cavity (15) for the switching device (5), and after the forming of the cavity the insert is placed into the cavity for completing the switching device.

13. A portable data carrier having an electronic circuit (3) for storing and/or processing data, a data transmission device (4) and a switching device (5), wherein a data transmission can be enabled with the switching device (5), **characterized in that** there is connected in parallel to the switching device (5) an electrical connecting element (6) which bridges the switching device (5).

14. The portable data carrier according to claim 13, **characterized in that** the electrical connecting element (6) is arranged in the area of the high-embossing.

15. The portable data carrier according to claim 13, **characterized in that** the electrical connecting element (6) has a receiving device for receiving energy for an at least partial removal or destruction of the electrical connecting element (6).

## Revendications

1. Procédé d'initialisation et/ou de personnalisation d'un support de données portable (1) comprenant un circuit électronique (3), un dispositif de transmission de données (4) et un dispositif de commutation (5), une transmission de données étant librement commutable au moyen du dispositif de commutation (5), **caractérisé en ce que**, préalablement à l'exécution de l'initialisation et/ou de la personnalisation, il est procédé à un pontage du dispositif de commutation (5), et **en ce que** ledit pontage est annulé après exécution de l'initialisation et/ou de la personnalisation.

2. Procédé selon la revendication 1, **caractérisé en ce que** la transmission de données est effectuée sans contact au moyen du dispositif de transmission de données (4).

3. Procédé selon l'une des revendications précédentes, **caractérisé en ce que** le pontage du dispositif de commutation (5) est réalisé sous forme de composant du support de données portable (1).

4. Procédé selon l'une des revendications précédentes, **caractérisé en ce que** le pontage du dispositif de commutation (5) est réalisé lors de la fabrication du support de données portable (1).

5. Procédé selon l'une des revendications précédentes, **caractérisé en ce que** le dispositif de commutation (5) est ponté au moyen d'un élément de connexion électrique (6) fixement raccordé.

6. Procédé selon la revendication 5, **caractérisé en ce que** l'élément de connexion électrique (6) est au moins partiellement retiré ou détruit pour annuler le pontage.

7. Procédé selon la revendication 6, **caractérisé en ce que** une partie du support de données portable (1) est retirée au niveau de l'élément de connexion électrique (6).

8. Procédé selon l'une des revendications 6 ou 7, **caractérisé en ce que** l'élément de connexion électrique (6) est au moins partiellement retiré ou détruit par action mécanique.

9. Procédé selon l'une des revendications 6 à 8, **caractérisé en ce que** l'élément de connexion électrique (6) s'étend dans la zone d'embossage du support de données portable et est au moins partiellement retiré ou détruit lors de l'embossage.

10. Procédé selon l'une des revendications 6 ou 7, **caractérisé en ce que** l'élément de connexion électrique (6) est au moins partiellement retiré ou détruit par application d'énergie.

11. Procédé selon la revendication 10, **caractérisé en ce que** l'énergie est conduite vers un dispositif de réception (9) réalisé sous forme de composant de l'élément de connexion électrique (6).

12. Procédé d'initialisation et/ou de personnalisation d'un support de données portable (1) comprenant un circuit électronique (3), un dispositif de transmission de données (4) et un dispositif de commutation (5), une transmission de données étant librement commutable au moyen du dispositif de commutation (5), le dispositif de commutation étant composé de deux surfaces de contact (12) disposées dans une cavité et d'un insert, **caractérisé en ce qu'**un élément de connexion électrique (6) reliant électriquement les surfaces de contact (12) avant l'initialisation et/ou la personnalisation, est au moins partiellement retiré après initialisation et/ou personnalisation du support de données lors de la formation d'une cavité (15) pour le dispositif de commutation (5), et **en ce qu'**après formation de la cavité, l'insert est mis en place dans la cavité pour compléter le dispositif de commutation.

13. Support de données portable comprenant un circuit électronique (3) pour la mémorisation et/ou le traitement de données, un dispositif de transmission de données (4) et un dispositif de commutation (5), une transmission de données étant librement commutable au moyen du dispositif de commutation (5), **caractérisé en ce qu'**un élément de connexion électrique (6) est monté en parallèle du dispositif de commutation (5), lequel ponte le dispositif de commutation (5).

14. Support de données portable selon la revendication 13, **caractérisé en ce que** l'élément de connexion électrique (6) est disposé dans la zone d'embossage.

15. Support de données portable selon la revendication 13, **caractérisé en ce que** l'élément de connexion électrique (6) comporte un dispositif de réception pour la réception d'énergie aux fins d'un retrait ou d'une destruction au moins partiels de l'élément de connexion électrique (6).
